Europäisches Patentamt

European Patent Office

Office européen des brevets

(11) Publication number: **0 411 651 A1**

# EUROPEAN PATENT APPLICATION

(21) Application number: 90114907.0

(51) Int. Cl.⁵: **A01J 25/06**

(22) Date of filing: **03.08.90**

(30) Priority: **03.08.89 FI 893687**

(43) Date of publication of application:
**06.02.91 Bulletin 91/06**

(84) Designated Contracting States:
**AT CH DE DK GB LI SE**

(71) Applicant: **HACKMAN-MKT OY**
**Emalikatu 10 B**
**SF-04400 Järvenpää(FI)**

(72) Inventor: **Kivelä, Tapani**
**Juhannustie 21 I 17**
**SF-00750 Helsinki(FI)**
Inventor: **Dianoff, Paavo**
**Kallioruohontie 8**
**SF-01300 Vantaa(FI)**

(74) Representative: **Weitzel, Wolfgang, Dr.-Ing.**
**Friedenstrasse 10**
**D-7920 Heidenheim(DE)**

(54) **Cheese kettle.**

(57) The invention relates to a cheese kettle (1) designed for the separation of whey from cheese mass and cutting up of the mass into granules. The kettle is preferably a horizontally mounted cylindrical kettle provided with at least one tool (4,9) for treating the cheese mass, said tool comprising a barlike frame (11) which follows the interior surface of the kettle wall as the tool is moving, and a mesh (7) of threadlike and/or knifelike cutting devices inside the frame.

The essential feature of the invention is that the frame (11) of the tool (4,9) is provided with protruding flexible cutting elements (8) designed to cut off the layer of cheese mass lying closest to the interior surface of the kettle (1). The cutting elements (8) may be threads bent into arcs, said threads being attached at both ends to the frame and so arranged that the arcs partially overlap.

Fig.1

## CHEESE KETTLE

The present invention concerns a cheese kettle having a cylindrical wall and provided with at least one tool for treating the cheese mass, said tool comprising a barlike frame which follows the interior surface of the kettle wall as the tool is moving, and threadlike and/or knifelike treating devices inside the frame, by means of which the cheese mass can be cut up into granules.

Cheese kettles, in which whey is separated from cheese mass and the mass is cut up into granules, are usually horizontal or vertical cylindrical containers provided with one or more tools for treating the cheese mass. The tools perform the granulation of the mass and stir the mixture of whey and granules before it is removed from the kettle.

In a cylindrical, horizontal cheese kettle, the cheese mass to be granulated usually fills up about half the space in the kettle. The mass is at first cut up with a tool provided with a mesh of threadlike treating devices by passing the tool from one end of the kettle to the other in the direction of its axle, so that the tool cuts the mass into elongated strips. Next, these strips of cheese mass are cut into granules by rotating one or more essentially rectangular tools about the axle of the kettle, said tools being mounted in parallel with the axle and comprising a mesh of threadlike or knifelike treating devices. Finally, the granulating tools are turned to a position above the surface of the mixture of cheese mass and whey, whereupon separate stirring devices rotatable about the axle of the kettle are immersed in the mixture and moved back and forth in it until the mixture is let out into cheese moulds.

A problem with currently used cheese kettles is that a layer of cheese mass sticks to the interior surface of the kettle and cannot be reached by the tools cutting the mass, for which reason the mass in this layer cannot be granulated. The problem arises from the fact that the tools, having a rigid construction, must not touch the kettle surface but have to be kept clear of it so that they can move freely. The mass adhering to the kettle wall acts as an isolating layer impeding the heating of the mass. In addition, it may burn fast on the wall, and it may also come off during stirring in flat lumps which will generally not break down but remain unchanged in the mass obtained.

In principle, the problem referred to is independent of the form and position of the cheese kettle, but in practice it has been especially troublesome in the case of cheese production using horizontal cylindrical kettles.

The object of the present invention is to achieve a solution that enables the above-mentioned problem regarding the sticking of the cheese mass to be eliminated. The invention is characterized in that the frame of the tool cutting the cheese mass is provided with protruding flexible cutting elements for detaching the layer of cheese mass that lies closest to the interior surface of the kettle.

The flexible cutting elements of the invention are preferably threadlike parts bent into an arc, both ends of which are attached to the frame. During the cutting up of the cheese mass, these elements sweep the interior surface of the kettle without essential changes occurring in their form, effectively detaching all cheese mass remaining inside their arcs.

An embodiment of the invention is characterized in that the tool elements cutting up the cheese mass consist of threads arranged radially relative to the axle of the kettle and attached to the barlike frame, said threads being bent through $180°$ in the area next to the kettle wall in such manner that these bent parts of the threads constitute cutting elements protruding from the frame. The frame may be provided with holes in which the threads acting as cutting elements are mounted.

In an alternative embodiment of the invention, the cutting elements protruding from the frame may consist of a separate thread laced in the frame. This thread may be bent into loops which are attached to the frame in such a way that the curved cutting elements formed by the thread partially overlap. This ensures that a maximal portion of the cheese mass lying next to the kettle wall will come inside the curved cutting elements and be detached from the wall.

The invention is primarily applicable in horizontal cylindrical cheese kettles, in which the cheese mass sticking to the interior surface of the kettle has been a special problem. In such kettles, both the tool moving longitudinally in the kettle to cut the mass into elongated strips and the tools rotated transversely about the axle of the kettle to cut the strips into granules can be provided with flexible cutting elements protruding from the frame as provided by the invention.

In the following, the invention is described in detail by the aid of examples by referring to the attached drawings, in which

fig. 1 presents an embodiment of the cheese kettle of the invention in longitudinal section,

fig. 2 presents a cross section of the kettle, taken along line II - II in fig. 1,

fig. 3 presents part of the edge of a tool provided in the kettle, in which threads arranged radially relative to the axle of the kettle form curved cutting elements protruding from the frame, and

fig. 4 presents an alternative embodiment of the invention, in which the curved cutting elements on the edge of the tool consist of a thread laced in the frame of the tool.

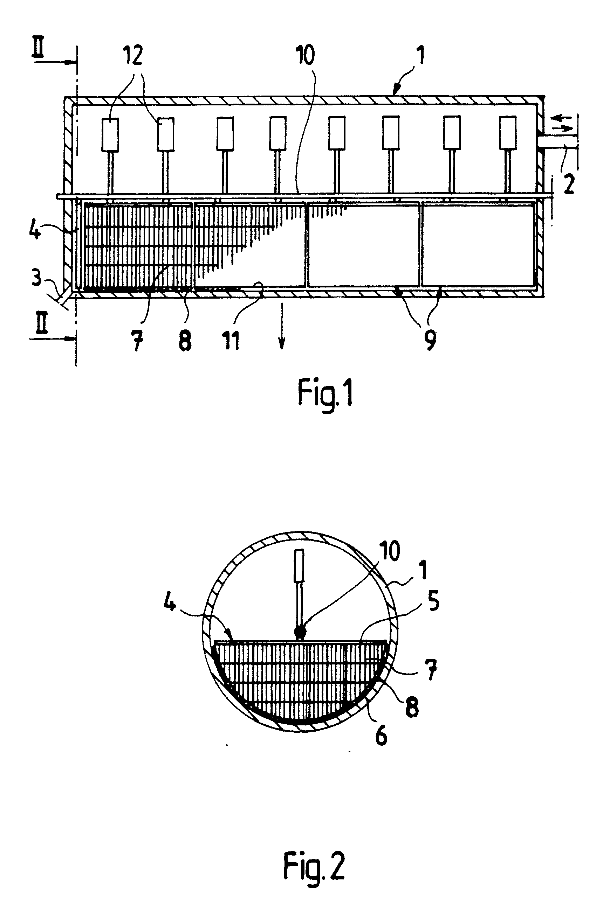

Figs. 1 and 2 illustrate a horizontal cheese kettle 1 of a round cross section, in which the whey is separated from the cheese mass and the mass is cut up into granules before it is let out into cheese moulds. The kettle is provided with a supply duct 2, which can be used to supply milk into the kettle and also to remove the whey separated from the cheese mass, and with an exhaust duct 3, through which the granules and the remaining whey can be removed from the kettle.

In the cheese kettle 1 illustrated, the mass is cut up into granules by a two-stage operation. The first stage uses a tool 4 of an essentially semicircular form as shown in fig. 2, comprising rigid barlike frame parts 5,6 and a mesh 7 of longitudinal and transverse threadlike treating devices. In addition, the tool 4 comprises flexible cutting elements 8 protruding from the curved frame part 6 following the interior surface of the kettle 1. These cutting elements 8 will be described later on. In the second stage of the cutting operation, rectangular tools 9 as shown in fig. 1 are used. These are arranged side by side along the longitudinal axle 10 of the kettle. Each of these tools 9 comprises a frame 11 consisting of rigid barlike parts and a mesh 7 consisting of longitudinal and transverse treating devices cutting the cheese mass. Most of the treating devices comprised in the tools 9 are of a threadlike construction, but it is also possible to use more rigid, knifelike devices placed at certain distances among the threadlike ones. In the same way as in the case of the above-mentioned semicircular tool 4, each of the rectangular tools 9 is provided with flexible cutting elements 8 protruding from the frame 11, said elements being placed on that side of the frame which faces the interior surface of the kettle.

During the first stage of the mass cutting operation, the rectangular tools 9 shown in fig. 1 are turned up to the level of the longitudinal axle 10 of the kettle or above it, so that the semicircular tool 4 shown in fig. 2 can be passed axially from one end of the kettle to the other. During this operation, the mass is cut up into longitudinal strips by the mesh 7 consisting of the treating devices comprised in the tool 4. In the next stage, the collateral rectangular tools 9 are rotated about the axle 10 through the cheese mass so that the strips are cut up into granules. Finally, the spadelike stirring devices 12 placed opposite to the rectangular tools 9 are brought into the mixture of cheese granules and whey by turning the axle 10, and the mixture is stirred by moving the stirring devices to and fro until the mass and whey are let out through the exhaust duct 3.

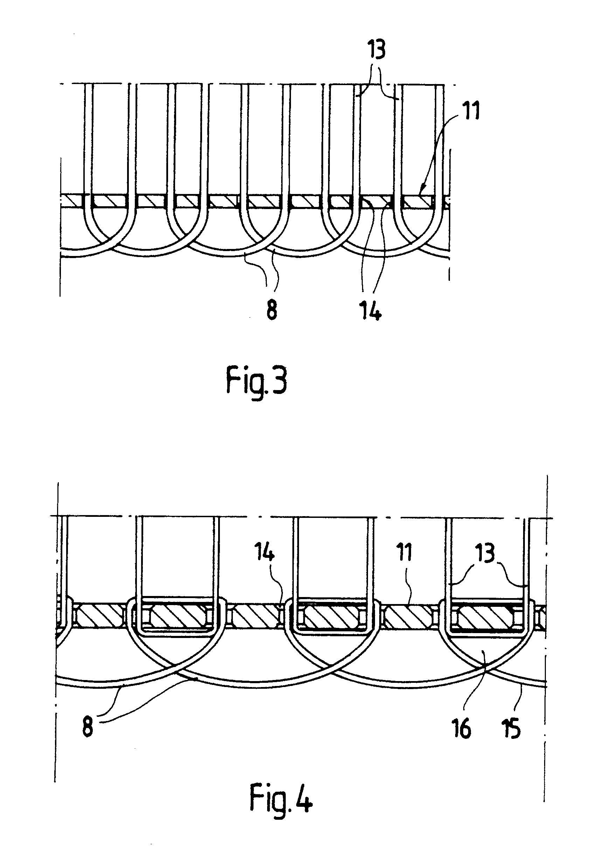

The cutting elements 8 belonging to the cutting tools 4,9, protruding from the frame parts 6,11 facing the interior surface of the kettle, are designed to cut off the layer of cheese mass lying closest to the surface. Fig. 3 illustrates a solution in which the threadlike treating devices 13 arranged radially relative to the axle 10 of the kettle in the rectangular tool 9 mounted longitudinally in the kettle are passed through holes 14 in the side member of the frame 11 of the tool and bent through 180° in such manner that the arcs formed by the threadlike devices and protruding from the frame constitute cutting elements 8 which cut off the cheese mass from the kettle surface. The cutting elements 8 are flexible and interlaced as shown by fig. 3, so that, as they sweep the interior surface of the kettle, they detach almost all of the cheese mass sticking to it.

In the alternative embodiment illustrated by fig. 4, the threadlike treating devices 13 passing through the holes in the frame 11 of the tool are mounted tightly on the frame. The flexible cutting elements 8 protruding from the frame 11 are formed by a separate thread 15 laced through the holes 14 in the frame in such a way that it forms a loop 16 around each point of attachment, producing curved cutting elements 8 partially orvelapping.

The cutting elements 8 protruding from the frame of the semicircular tool 4 moving longitudinally through the kettle are threadlike curved elements which may be formed either as illustrated by fig. 3 or as illustrated by fig. 4.

It is obvious to a person skilled in the art that different embodiments of the invention are not restricted to the examples described above, but that they may instead be varied within the scope of the following claims.

## Claims

1. Cheese kettle (1) having a cylindrical wall and provided with at least one tool (4,9) for treating the cheese mass, said tool comprising a barlike frame (6,11) which follows the interior surface of the kettle wall as the tool is moving, and threadlike and/or knifelike treating devices (13) inside the frame, enabling the cheese mass to be cut up into granules, **characterized** in that the frame (6,11) of the tool (4,9) is provided with protruding flexible cutting elements (8) for detaching the layer of cheese mass lying closest to the interior surface of the kettle (1).

2. Cheese kettle according to claim 1, **characterized** in that the frame (6,11) is provided with protruding threadlike cutting elements (8) bent into an arc, both ends of which are attached to the frame.

3. Cheese kettle according to claim 2, **characterized** in that the elements of the tool (9) which cut up the cheese mass consist of threads (13) arranged radially relative to the axle (10) of the kettle and attached to the barlike frame (11), said threads being bent through 180° in the area next to the kettle wall in such manner that these bent parts of the threads constitute cutting elements (8) protruding from the frame.

4. Cheese kettle according to claim 3, **characterized** in that the barlike frame (11) is provided with holes (14) through which the threads acting as cutting elements (8) are passed.

5. Cheese kettle according to claim 2, **characterized** in that the cutting elements (8) protruding from the frame consist of a thread (15) laced in the barlike frame (11) of the tool.

6. Cheese kettle according to claim 5, **characterized** in that the thread (15) is bent into loops (16) by which it is so attached to the frame (11) that the protruding curved cutting elements (8) formed by the thread partially overlap.

7. Cheese kettle according to claim 5 or 6, **characterized** in that the frame (11) is provided with holes (14) through which the thread (15) laced in the frame is passed.

8. Cheese kettle according to any one of the preceding claims, **characterized** in that it is a horizontally mounted cylindircal cheese kettle (1).

9. Cheese kettle according to claim 8, **characterized** in that the kettle (1) comprises one or more essentially rectangular tools (9) rotatable about its longitudinal axle (10), said tools consisting of a rigid frame (11) holding longitudinal and transverse treating devices (13) cutting the mass, the tools being additionally provided with flexible cutting elements (8) protruding from the frame and placed next to the interior surface of the kettle.

10. Cheese kettle according to claim 8 or 9, **characterized** in that the kettle (1) comprises at least one tool (4) movable in the longitudinal direction of the kettle and provided with longitudinal and transverse treating devices (13) cutting the cheese mass and with a curved frame (6) following the interior surface of the kettle, said frame (6) being provided with protruding flexible cutting elements (8) designed to cut off the layer of mass lying closest to said surface.

Fig.1

Fig.2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-4 134 78 (CHALON-MEGARD FRERES S.A.) * page 1, lines 22 - 64; figures 1-2 * | 1 | A 01 J 25/06 |
| A | NL-C-1 195 4 (C.P.DROS) * page 2, lines 1 - 5; figures 1-2 * | 1 | |
| A | DE-U-8 512 538 (H.BENTELE) | | |

TECHNICAL FIELDS SEARCHED (Int. Cl.5)

A 01 J

The present search report has been drawn up for all claims

| Place of search | Date of completion of search | Examiner |
|---|---|---|
| The Hague | 08 November 90 | NEHRDICH H.J |